# EUROPEAN PATENT APPLICATION

(11) **EP 2 063 236 A1**
(43) Date of publication of application: **27.05.2009**
(21) Application number: 08253786.1
(22) Date of filing: 20.11.2008
(51) Int. Cl.: G01F 23/292, G01N 21/41

(54) **Optical fluid level indicator with liquid recognition**

(30) Priority: 22.11.2007 IL 18759707
(71) Applicant: Virtue Sense Ltd., Rosh Ha'ain 48091 (IL)
(72) Inventor: Gan, Livne, Medereshet Ben Gurion 84990 (IL); Tzidon, Dekel, Hod Hashron 45309 (IL)
(74) Representative: Jehan, Robert

(57) **Abstract**

A fluid level detector device and method are disclosed, for determining the height level of one or more immiscible fluids in a vessel. The device includes at least one optical set-up including a light source (12) for generating a beam of light of predetermined width and optical characteristics, the light beam arranged to be directed into the fluid so as to cause refraction of the light beam, dependent on the index of refraction of the fluid, the light beam covering a predetermined detection region. A photosensitive detector (18) is provided capable of generating a signal corresponding to at least one optical characteristic of the light beam after passing the fluid. An interpreter (52) is provided for receiving the signal, interpreting the signal and indicating the height level of the fluid.
Furthermore, by knowing the refraction indices of the anticipated fluids that may be inside the vessel, the type of fluid inside can be determined.

## Description

### FIELD OF THE INVENTION

The present invention relates to fluid level measurements. More specifically the present invention relates to a device and method for optical fluid level indication.

### BACKGROUND OF THE INVENTION

In many cases fluid level has importance in determining fluid quantity (volume) in a vessel of known dimensions. In other cases it is important to determine the existence of different types of fluids arranged in layers and their heights (for example, undesired existence of water in a fuel tank, characterized by a layer of water under the fuel layer - this is undesired for any machine operating on fuel, and has very grave consequences in aircrafts).

There are various ways to measure fluid height level in a tank.

The traditional way is to use a dip stick which is dipped in the tank and when drawn out the fluid level is determined visually on the stick itself (for example oil dip stick in the engine of automobile).

Another way of measuring the height level of fluid is to use a gauge with a buoy that floats over the fluid, and whose position can be determined in various ways (for example, electromagnetically, optically).

External measurements of fluid heights include actual observation on the height level of the fluid (if the vessel walls are transparent), positioning sensors on the external surface of the vessel (e.g. acoustic sensors, conduction sensors, temperature sensors).

Electro-optical devices were introduced also.

US 6,831,290 (Mentzer) discloses a system for measuring a level of a liquid that comprises a light source adapted to generate light of a predetermined wavelength, an optical waveguide slab at least partially filled with a material adapted to fluoresce when illuminated by the light having a predetermined wavelength, and a light pipe. The light pipe is adapted to transmit the light to the optical waveguide slab at an angle that causes the light to be internally reflected only within a portion of the optical waveguide slab located above the fluid thereby illuminating the fluorescent material within the portion of the optical waveguide slab located above the liquid. The system also comprises a photo-multiplier tube adapted to generate an electrical output in response to the fluorescence of the fluorescent material.

In US 6,172,377 (Weiss) there was disclosed a liquid level sensor comprising a transparent waveguide containing fluorescent material that is excited by light of a first wavelength and emits at a second, longer wavelength. The upper end of the waveguide is connected to a light source at the first wavelength through a bevelled portion of the waveguide such that the input light is totally internally reflected within the waveguide above an air/fluid interface in a tank but is transmitted into the liquid below this interface. Light is emitted from the fluorescent material only in those portions of the waveguide that are above the air/fluid interface, to be collected at the upper end of the waveguide by a detector that is sensitive only to the second wavelength. As the interface moves down in the tank, the signal strength from the detector will increase.

A simple optical dip-stick like device was disclosed in US 4,878,383 (Weigand et al.) describing a sight glass that utilizes both reflected light at a glass to air interface and the light transmitted through a glass to liquid to glass interface to form a light pattern that is indicative of the true fluid level. By requiring that light always appears in either an "air" or "liquid" channel, any absence of light is assumed due to film coated surfaces or to other abnormal conditions. An absence of light is a signal that maintenance is required.

In WO 2005/101971 (Gan) there was disclosed an optical indicator for identification of a changed state of a fluid with respect to a reference state of the same fluid or for monitoring or checking or authenticating a fluid. The fluid has an optical parameter that changes with the change of the state of the fluid. The optical indicator may be attached to or integral with a container or packaging for the fluid. The indicator includes a cavity configured to be filed with the fluid such that the fluid filled cavity forms a variable optical element having an optical performance that varies depending on the changeable fluid's optical parameter. The fluid filled cavity coupled to other optical components of the indicator provides an image that may be compared to a reference image to detect a change of at least one optical property of the fluid as compared to the reference fluid. The comparison may be performed visually or by a suitable detector. The comparison may include automated processing of the detector's output signal(s).

In WO 2005/050179 (Gan) there was disclosed method and system for identification of a changed state of a fluid with respect to a reference state of the same fluid, the fluid having an optical parameter changing with the change of the state of the fluid. The method comprises: a) providing an optical arrangement including a transparent enclosure with a portion of the fluid, and an object observable through the optical arrangement, the arrangement being designed such that an image of the object in the changed state of the fluid is optically distinctive from an image of the object in the reference state of the fluid due to change of the optical parameter, at least one of the images being predetermined; b) illuminating the object with diffuse light; c) observing a current image of the object through the optical arrangement along an optical axis; and d) comparing the current image to the predetermined image to identify the changed state of the fluid. The comparison and the identification may be performed by eye or by a sensor with a logical circuit.

### SUMMARY OF THE INVENTION

The present invention seeks to provide an improved fluid level indicator that can determine the presence of fluid in a vessel.

The present invention also seeks to provide an improved fluid level indicator that can determine the height level of the fluid in the vessel.

The preferred embodiments seek to provide a fluid level indicator that can indicate the height levels of multiple fluids sharing the same vessel at the same time.

There is provided, in accordance with some embodiments of the present invention, a fluid level detector device, for determining the height level of one or more immiscible fluids in a vessel, the device comprising:
at least one optical set-up comprising;
a light source for generating a beam of light of predetermined width and optical characteristics, the light beam arranged to be directed into the fluid so as to cause refraction of the light beam, dependent on the index of refraction of the fluid, the light beam covering a predetermined detection region;
a photosensitive detector capable of generating a signal corresponding to at least one optical characteristic of the light beam after passing the fluid; and
an interpreter for receiving the signal, interpreting the signal and indicating the height level of the fluid.

Furthermore, in accordance with some embodiments of the present invention, the photosensitive detector is operable to generate a signal proportional to the light coverage on the detector or proportional to the light position on the detector or proportional to the intensity of incident light on the detector.

Furthermore, in accordance with some embodiments of the present invention, the device is provided with opposite inclined reflective surfaces in the detection region, so as to facilitate passage of the light beam from the light source to the photosensitive detector.

Furthermore, in accordance with some embodiments of the present invention, the device comprises a dip stick, the dip-stick comprising an elongated body made from material transparent to the light beam, the light source and the photosensitive detector coupled to the dip stick, facilitating passage of the light beam through the transparent material of the dip stick.

Furthermore, in accordance with some embodiments of the present invention, the dip stick comprises two substantially opposite columns, each column defining at least one interface surface with the fluid, the light source directing the light beam through one of the two column and the photosensitive detector positioned so that it picks up light passing through the other of the two columns, after passing through one interface surface into the fluid and through the other interface surface out of the fluid, in the detection region.

Furthermore, in accordance with some embodiments of the present invention, one or more of the interface surfaces have a shape selected from a group of shapes containing: a plane, a concave surface, a convex surface.

Furthermore, in accordance with some embodiments of the present invention, one or more of the interface surfaces comprises one or more optical element selected from a group of optical elements which includes diffractive lenses, diffractive prisms beam splitters, colour filters, polarization filters, gratings and pinholes.

Furthermore, in accordance with some embodiments of the present invention, the dip stick is provided with opposite inclined reflective surfaces, one reflective surface provided at an end of one column and the other refractive surface provided at a corresponding end of the other column.

Furthermore, in accordance with some embodiments of the present invention, the interface surfaces and the inclined surfaces each define different angles with respect to a reference plane.

Furthermore, in accordance with some embodiments of the present invention, the two columns comprises opposite portions of a hollow tube.

Furthermore, in accordance with some embodiments of the present invention, said at least one optical set-up comprises a plurality of optical set-ups, and wherein the optical setups are arranged in an arrangement selected from a group of arrangements that include peripheral arrangements, stacked arrangements and staggered arrangements.

Furthermore, in accordance with some embodiments of the present invention, the light source and the photosensitive sensor are placed on opposing sides of a support platform in between which the vessel may be inserted.

Furthermore, in accordance with some embodiments of the present invention, the support platform is provided with a bottom surface on which the vessel may be placed.

Furthermore, in accordance with some embodiments of the present invention, there is provided a method for determining the height level of one or more immiscible fluids in a vessel, the method comprising:
providing a light source for generating a light beam of predetermined width and optical characteristics and a photosensitive detector;
directing the light beam into the fluid so as to cause refraction of the light beam, dependent on the index of refraction of the fluid, the light beam covering a predetermined detection region;
obtaining from the photosensitive detector a signal corresponding to at least one optical characteristic of the light beam after passing the fluid; and
interpreting the signal to determine the height level of said one or more fluids.

Furthermore, in accordance with some embodiments of the present invention, the method further comprises determining presence or type of said one or more fluids in the vessel by determining existence or location of the coverage of the beam on the photosensitive sensor.

### BRIEF DESCRIPTION OF THE DRAWINGS

Embodiments of the present invention are described below, by way of example only, with reference to the accompanying drawings, in which:
Fig, 1a illustrates a cross-sectional view of a fluid level dip-stick indicator device, in accordance with a preferred embodiment of the present invention, with inclined reflective walls dipped in a vessel containing liquid, the liquid being opaque, whereas the fluid on top the liquid is transparent.
Fig. 1b illustrates a cross-sectional view of a fluid level dip-stick indicator device, in accordance with a preferred embodiment of the present invention, with inclined reflective walls dipped in a vessel, the liquid being transparent, whereas the fluid on top the liquid is opaque.
Fig. 2 illustrates a cross-sectional view of a vessel with integral height level indicator device, in accordance with another preferred embodiment of the present invention, with inclined reflective walls. ,
Fig. 3 illustrates a cross-sectional view of a detail of a dip-stick version of a fluid level dip-stick indicator device, in accordance with a preferred embodiment of the present invention, in a staggered formation.
Fig. 4a illustrates a top view of a dip-stick version of a fluid level dip-stick indicator device, in accordance with a preferred embodiment of the present invention, in annular staggered formation.
Fig. 4b illustrates an isometric view of a section of a fluid level dip-stick indicator device, in accordance with a preferred embodiment of the present invention, in annular staggered formation.
Fig, 5 illustrates a cross-sectional view of a detail of a fluid level dip-stick-indicator device, in accordance with a preferred embodiment of the present invention, with pairs of beam splitters acting as mirror set-ups for extended level detection, the device dipped in opaque fluid.
Fig. 6 illustrates an isometric view of a fluid level dip-stick indicator device, in accordance with a preferred embodiment of the present invention, with optical plane variations.
Fig. 7a illustrates a cross-sectional view of a fluid level dip-stick indicator device, in accordance with a preferred embodiment of the present invention, with a prism provided across the input waveguide.
Fig. 7b illustrates the diffraction of light through the prism when the prism is coupled to high density fluid (for example, fuel).
Fig. 7c illustrates the reflection of light through the prism when the prism is coupled to low density fluid (for example, air).
Fig. 8 illustrates a cross-sectional view of a fluid level dip-stick indicator device, for determining presence of diesel fuel and/or water in a tank (which may suitable for pilots verifying the purity of fuel in the aircraft fuel tank), in accordance with a preferred embodiment of the present invention, the indicator determining presence of water and air (no fuel).
Fig. 9 illustrates a cross-sectional view of the fluid level dip-stick indicator device, the indicator determining presence of diesel fuel and air.
Fig. 10 illustrates a cross-sectional view of the fluid level dip-stick indicator device, the indicator determining presence of water, diesel fuel and air.
Fig. 11 illustrates a schematic block diagram of a fluid level indicator device in accordance with a preferred embodiment of the present invention.
Fig. 12 illustrates a cross-sectional view of a fluid level indicator in accordance with another preferred embodiment of the present invention.

### DETAILED DESCRIPTION OF EMBODIMENTS

"Opaque" in the context of the present disclosure means that the light will not go through because the fluid blocks specific range of wave lengths of light or the angle of incidence is above the critical angle and total internal reflection occurs.

A fluid in the context of the present disclosure is defined as a substance that continually deforms (flows) under an applied shear stress regardless of the magnitude of the applied stress. It is a subset of the phases of matter and includes liquids, gases, plasmas and, to some extent, plastic solids. For the purpose of the present disclosure we refer to fluids that are transparent to electromagnetic radiation in a predetermined wavelength range.

An aspect of the preferred embodiments is the provision of a broad light beam that is directed onto a vessel containing one or more immiscible fluids, the light beam directed laterally across the vessel so that an interface surface (so called the "height level" of the fluid) is caught in the beam.

The teachings herein are based on the fact that a fluid in a vessel may possess different optical transmittance characteristics hence a photosensitive detector placed across the beam, after it has passed through the fluid is used in determining the height level, by considering the coverage rate of the detector, and intensities across it.

in its simplest form the teachings herein are based on directing a broad beam of light through a vessel containing fluid, the beam passing laterally with the top surface of the fluid (the "height level" of the fluid) being within the coverage of the beam. A photosensitive detector is placed in the optical path of the beam across the beam, so that differences in the transmittance of light are detected; and the coverage of light and the distribution of intensities across the photosensitive detector is used in determining the height level of the fluid in the vessel.

Another feature of the embodiments described herein is based on the fact that the index of refraction is different for different media.

Specifically, the index of refraction of a specific fluid is different than the index of refraction of air, and the index of refraction of one type of fluid is different from the index of refraction of another type of fluid.

The described embodiments utilize differences in refraction indices of various fluids to distinguish between them.

Based on knowing that fluids have various refraction indices the described embodiments provide a fluid level indicator device that directs a light beam of a predetermined width directed into the fluid at a predetermined angle with respect to at least one interface surface through which the light beam passes into or out of the fluid, so as to cause refraction of the light beam. The angle of refraction is determined dependent on the index of refraction of the fluid. The light beam is made to cover a detection region of predetermined dimension, and the top surface (the fluid height level) is made to be at least partially within the beam.

A photosensitive detector is provided in the optical path of the beam, after it has passed through the fluid, which is capable of generating a signal proportional to the light coverage on the detector of the light beam after it had passed the fluid. An interpreter for receiving the signal is provided, communicating with the photosensitive detector, interpreting the signal and indicating the height level of the top surface of the fluid.

The optical path of the light beam can take many forms. It can pass one way through the fluid, laterally across the vessel in which the fluid is located. Alternatively the light beam may originate from above the vessel, be directed into the fluid, then to be diverted by an inclined reflective surface and exit through a side wall of the vessel. Yet another alternative is to direct the light beam from above into the vessel, have the beam reflected of an inclined surface across the vessel and then redirected upwards.

The photosensitive detector is positioned across the emerging light beam to detect light coverage of the detecting sensor attributed to the refraction index of the fluid in the vessel.

In a simple preferred embodiment of the present invention a dip stick device comprises a tube whose wall is made of transparent material. The dip stick has slanted surfaces at its distal end so as to present a reflective surface diverting optical rays that may pass through the wall, coming from above, laterally across. When the dip stick is dipped in a fluid some of the fluid gets inside the tube at the distal end and becomes a part of the optical system and therefore the optical characteristics of the fluid influence the system optical overall response. A light beam that is allowed to traverse through the transparent wall is reflected from the slanted wall at the distal end, crosses over through the fluid and reflected by the opposite slanted surface, the direction of reflection depending on the index of refraction of both the transparent material of which the dip stick tube is made and the index of refraction of the fluid within the tube (following what is known as Snell's rule). Different fluids (with different refraction indices) will cause different refraction paths, so that an optical sensor coupled to the dip stick wall (at the anticipated direction of deflection) will get different signals from different fluids (in the context of the present invention the term "fluid" is meant to refer to both liquids and gases). By predetermining the length and angle of inclination of the slanted surfaces it is possible to design the dip stick device of the present invention to indicate the height level of a fluid within a vessel, or determine the presence and type of fluid or fluids present in the vessel.

The height level of fluid in a vessel may be determined by designing the dip stick to be long enough to touch the bottom of the vessel and have the slanted surfaces extend along a distance that is long enough to cover the anticipated depth of the fluid within the vessel and have the height level located within the span of the slanted surfaces. An optical sensor of known dimensions is to be placed at a known position covering the anticipated sector of deflection of the refracted light beam off the second slanted surface, or at least covering partially that sector. A processor gets the signals generated by the optical sensor and determines the coverage of the incident light beam across the optical sensor.

The height level of the fluid can be determined as it is directly related to the extent to which the optical sensor is covered by the incident beam. Furthermore, by knowing the refraction indices of the anticipated fluids that may be inside the vessel, one can determine the type of fluid inside or determine its absence. Other indications that can be interpreted to determine the height level include measuring the intensity of incident light on the photosensitive detector or detecting or sensing other optical characteristics associated with the light beam and the effects of it passing through the device of the described embodiments.

The dip stick tube may have a rectangular cross-section, so that the reflecting surfaces are planar and substantially maintain the lateral dimensions of the light beam.

Rectangular cross-section is demonstrated in the Figures for brevity although a dip stick device according with the teachings herein may have non-planar surfaces too. This will result in concentration, dispersion or other optical effect on the beam, depending on the geometry of the surfaces, which may lend itself to specific requirements and uses. For example the surfaces can be designed to present, together with the fluid within converging or diverging lenses. ,

In another preferred embodiment of the present invention the dip-stick device comprises two transparent columns of different geometries, which may include different shape, surfaces of different inclination angles, different materials (and hence different refraction indices), and other different parameters affecting the optical behaviour of the device.

Reference is now made to the Figures.

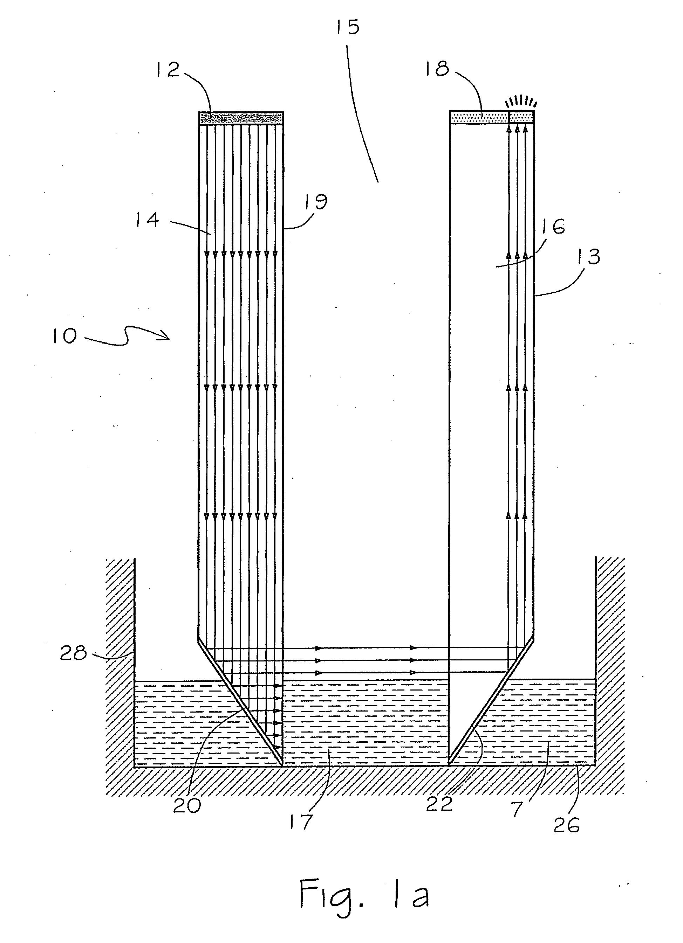

Fig. 1a illustrates a cross-sectional view of a dip-stick version of a fluid level dip-stick indicator device, in accordance with a preferred embodiment of the present invention, dipped in a vessel containing two immiscible fluids (here opaque liquid located at the bottom of the vessel and transparent gas - for example, air - over the liquid layer). The device comprises a hollow tube 10 with a lumen 15 passing through the tube, within its wall 13 As shown in the figure there are two solid columns 14, 16 (in the preferred embodiment there are actually opposite walls of the same tube, due to the tubular configuration of the tube) with inclined opposite reflecting surfaces (mirrors) 20, 22 at an angle of a, with respect to the bottom surface 26 of a vessel 28 containing fluid. An opening 17 is provided at the tip of the tube so that when the tube is dipped into vessel 28 and placed in contact with the bottom surface 26, some of the fluid 7 enters the hollow tube and the level of the fluid inside and outside are allowed to equal.

A light beam emitted from light source 12 passes through wall 14 and is reflected off the surface of mirror 20 and, depending on the fluid characteristic and level, refracts in through the fluid medium then it is reflected off the other mirror 22 and passes through wall 16 onto photo sensitive sensor 18.

Indication on the fluid level can be derived from the relative area of the photo sensitive sensor or array of sensors that has been illuminated. Depending on the type of the photo-sensitive sensor used, indication on the fluid level can be derived from the relative area illuminated, relative area darkened, overall or local intensity, or wave lengths and any combination thereof.

As there are two types of immiscible fluids, one of which - the lower layer - is opaque whereas the fluid of the upper layer is not, hence light will reach only a portion of the photo sensitive sensor array respective to the height of the border surface between the opaque fluid with respect to the bottom of the vessel.

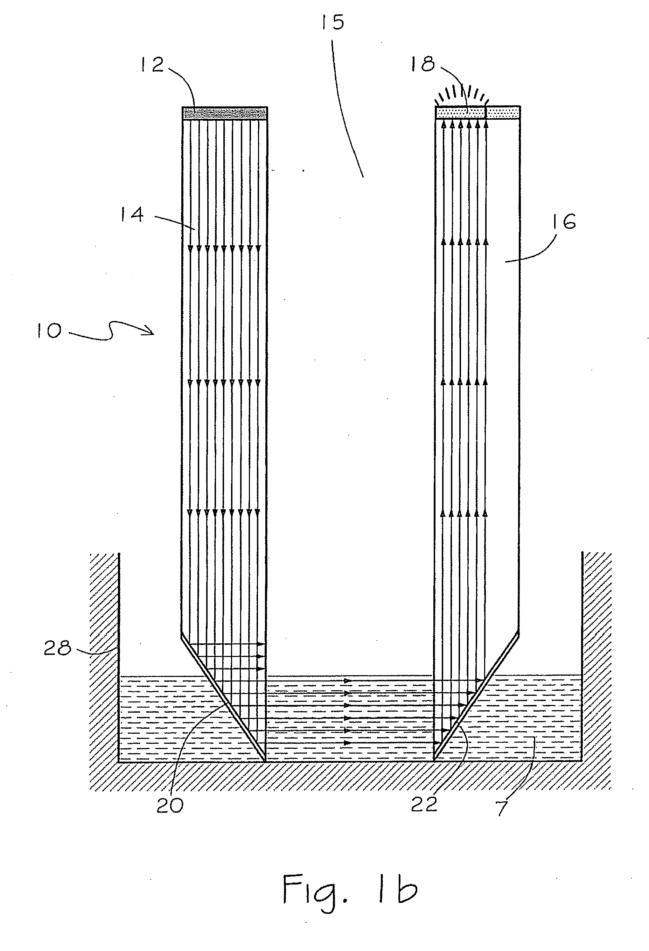

In Fig. 1b the two types of immiscible fluids are present too, but this time the fluid on the lower layer is transparent, whereas the fluid of the top layer is opaque. The extent of coverage of the photo sensitive sensor array corresponds to the height of the height of the border surface. This means that the device can be used to measure heights of a liquid from the bottom surface, or measure it from an upper reference point.

Once the fluid height level and the distance the light needs to propagate through the fluid medium (the diameter of the hollow within the tube) are known one can determine further optical characteristics.

The device can also be made in the form of two poles 14, 16 made of transparent material (such as glass, certain types of plastics) and designed with the two opposing mirrors.

The device is preferably designed to allow light to pass through both sides 14, 16 only when no fluid is present between the mirrors, and be diffracted off this optical path when fluid is present, in order to detect the mere presence of fluid (or specific type of fluid).

An embodiment of dipstick device in accordance with the present invention can be dipped from above or from various sides (although the optical set-up ought to be aligned accordingly so as to match the predicted top surface alignment).

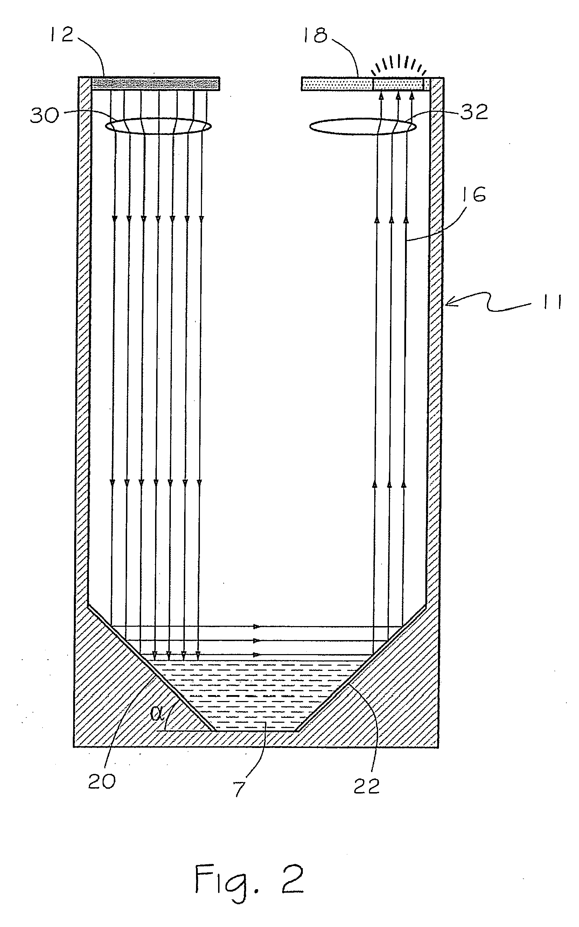

Fig. 2 illustrates a cross-sectional view of a vessel 28 with integral height level indicator device 11, in accordance with another preferred embodiment of the present invention, is provided with two oppositely aligned inclined reflecting surfaces 20, 22 at its bottom. To achieve better resolution of the photo receiver array 18 the emitted light beam is reduced to a beam of smaller diameter by an optical limiter 30 (for example an aperture) and the incident light beam is broadened by Optical arrangement 32. Lenses, prisms and other optical elements can be used, depending on the desired optical result.

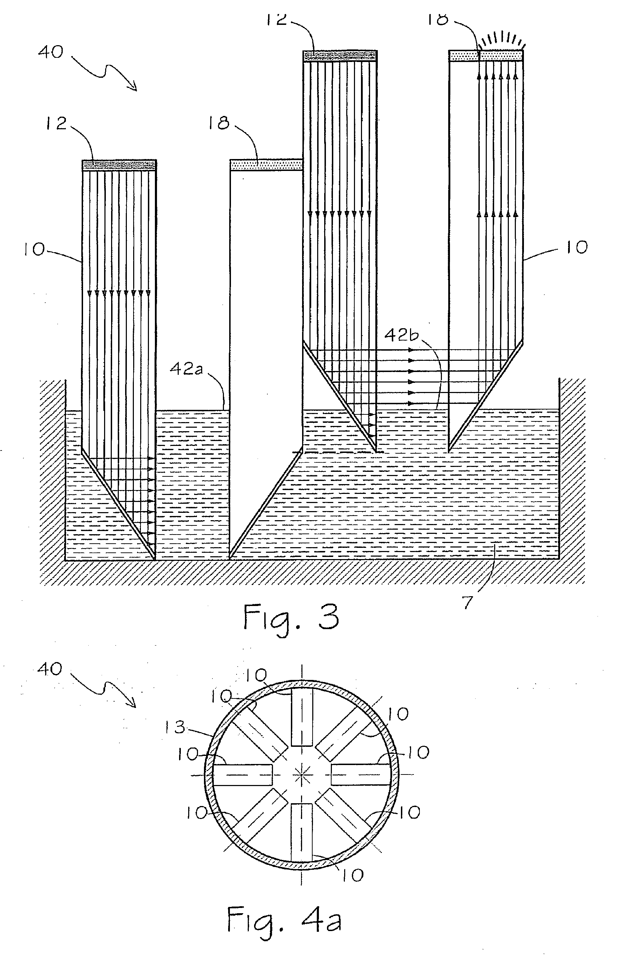

Fig. 3 illustrates a cross-sectional view of a detail of a dip-stick version of a fluid level dip-stick indicator device, in accordance with a preferred embodiment of the present invention, in a staggered formation. This embodiment is needed to overcome the limitation imposed on the functionality of the device due to the finite length of the mirrors. The effectiveness of the device is determined by the vertical height of the reflective surfaces (the mirrors), as only along that height the optical path of the light beam changes its course. Fluid whose height level is greater than the vertical height of the mirrors cannot be measured by the device shown in Fig. 1 (or 2). For that aim a device with a plurality of mirror set-up devices 10 in a staggered (gradual) formation is suggested. Note that while the fluid level 42a in the left-hand side vessel is above the higher end of the inclined reflecting surfaces, and therefore makes the reading obtained from that vessel meaningless, in the right-hand side vessel the fluid level 42b is within the measuring range, so that based on the knowledge of the relative positions of the staggered vessels it is possible to determine the height of the fluid level. The vessels can be arranged in a parallel arrangement so that the light source and photosensitive detector can be shared by all vessels.

This is in fact a design that multiplies the device shown in Fig. 1 (or 2), only with mirror set-ups in different elevations. The arrangement of the mirror set-ups may be in a spiral staircase formation, so as to more compact structure for high level measurements. The distribution of the mirror set-ups can be designed to offer continuous measurement of fluid heights (if the top end of one mirror set-up coincides with the bottom end of the next mirror set-up), or discretely, at various heights, so as to allow measurements of fluid levels at different height ranges.

Fig. 4a illustrates a top view of a dip-stick version of a fluid level dip-stick indicator device, in accordance with a preferred embodiment of the present invention, in annular staggered formation. Note that four mirror set-up devices 10 are arranges around the tube wall 13 in a circular arrangement. The inclination angles of all the mirror set-ups can be identical (which means that calculating the height level is carried out using the same mathematical formula). Alternatively the inclination angles of different mirror set-ups can be different, which means that different set-ups will work in different height ranges. It is fairly easy to determine in which device 10 the fluid level is within the measuring range (this is the device whose photo sensitive sensor array will get a reading corresponding to no coverage or total coverage).

In another preferred embodiment the inclination of the different mirror set-ups can be different while the mirror set-ups are all aligned in their heights, so as to allow use in different types of fluid.

In another preferred embodiment of the present invention two sets of dip sticks can be provided each with different optical settings to measure the height of two kinds of optional fluids in the same vessel (see for example Fig. 3).

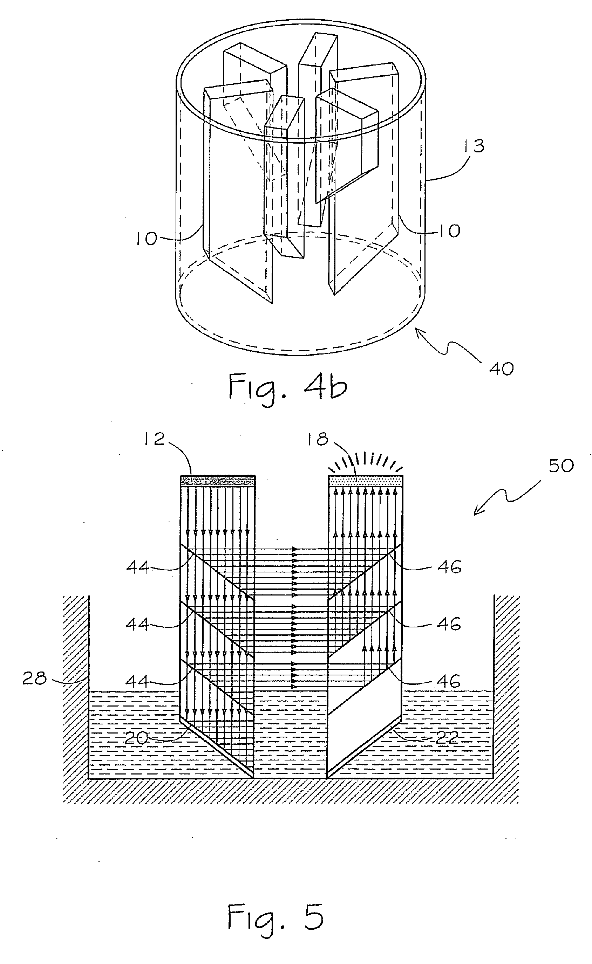

Fig. 4b illustrates a see-through isometric view of a section of a fluid level dip-stick indicator device, in accordance with a preferred embodiment of the present invention, in annular staggered formation.

Fig. 5 illustrates a cross-sectional view of a detail of a dip-stick version of a fluid level dip-stick indicator device 50, in accordance with a preferred embodiment of the present invention, with pairs of beam splitters acting as mirror set-ups for extended level detection. Here the beam splitters 44 renders the spiral staircase formation unnecessary as some of the light beam incident on a beam splitter is reflected while some passes through. This allows for arranging the mirror set-ups in parallel stacked arrangement. In this example the device have 4 levels of beam splitters surfaces; therefore choosing the first three beam splitters 44 to be 25% reflective and 75% transparent, while the last one 20 should be 100% reflective. The collecting side should use beam splitters 46 that are reflective from one side and transparent from the other side. The fluid level may be derived from the sum of intensities collected using a simple lookup table.

In a similar manner the splitters can be made to split light of certain wavelength (colour) and the wavelength (colour) of the incident light on the detector can indicate the height level.

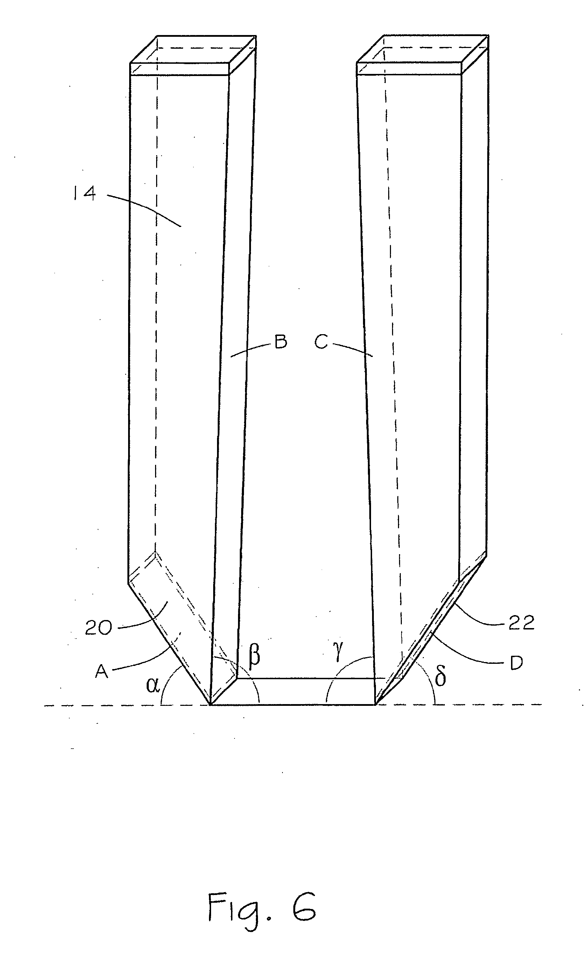

Fig. 6 illustrates in three dimensions a cross-sectional view of a fluid level dip-stick indicator device 10, in accordance with a preferred embodiment of the present invention, with two non-identical waveguide columns. The left-hand side column consists of surface A and Surface B, whereas the right-hand side column consists surface C and surface D. Angle a denoted to the angle between the horizon and surface A; while Angles p, y and 8 denoted to the angles between the horizon and surfaces B ,C and D respectively.

Surface A, D are preferably reflective and surfaces B, C fully or at least partially transparent in order to allow light to pass from the left-hand side column to the right-hand side column,

In some preferred embodiments of the present invention surfaces A, B, C and D may be in designed in various geometries, such as planar, concave, convex, diffractive lenses or diffractive prisms and/or surfaces A, B, C and D may be semi transparent in a form of beam splitters, colour filters, polarization filters or wavefront masking such as set of gratings or pinholes and/or combinations of the angles a, P, y and 8 and can form a system for high resolution of fluid identification and level measurement. This system will be able to obtain physical or chemical attributes regarding the fluid such as its type (e.g. fuel, oil, water), index of refraction, or other characteristics.

One can also design various combinations of surfaces geometries (A, B, C and D) and/or angles (a, P, *y* and 5) to let light pass through only for a specific range of fluids, whereas for other fluids the light will not reach the opposite mirror.

One can also design various combinations of surfaces geometries (A, B, C and D) and/or angles (a, p, *y* and 5) to transform a diffusive light into a specific wave length and then single out certain wave lengths.

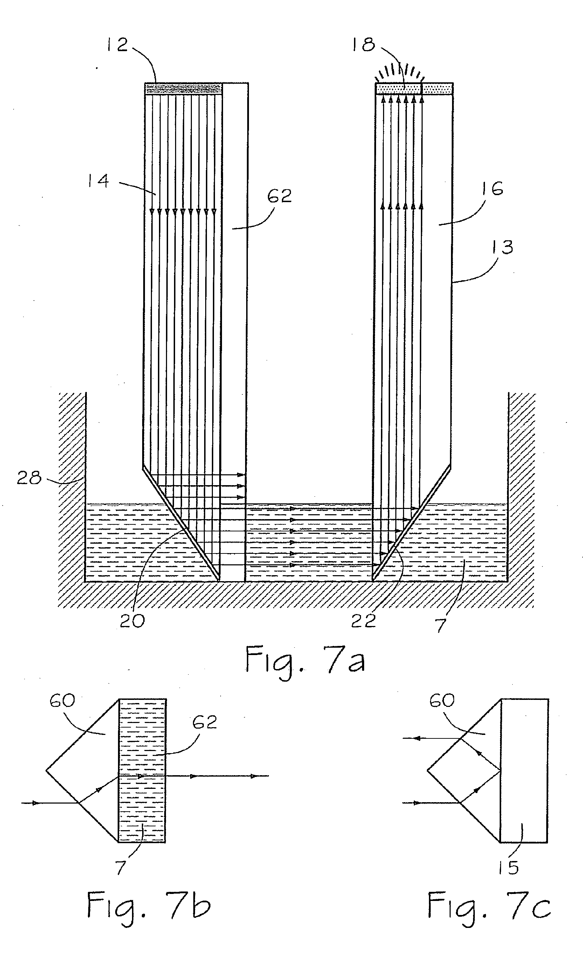

Fig. 7a illustrates a cross-sectional view of a fluid level dip-stick indicator device, in accordance with a preferred embodiment of the present invention, with a prism provided across the input waveguide. Prism 62 is provided internally across along the height of the left-hand side transparent column 14. The prism can be made, for example, of glass, or other optical material, or comprise a hollow prism filled with fluid having a known, desired, refraction index. The prism (shown as surface B in fig. 6) substitutes the need for p angle to be other than right-angle serving as a diffraction separator.

Fig. 7b illustrates the diffraction of light through the prism when the prism is coupled to fluid. In this case the light beam is refracted yet is capable of crossing the prism and exit in the same direction (only slightly deviated off its original direction).

Fig. 7c illustrates the reflection of light through the prism when the prism is not coupled to fluid. In this case light is returned and does not cross to the opposite transparent column.

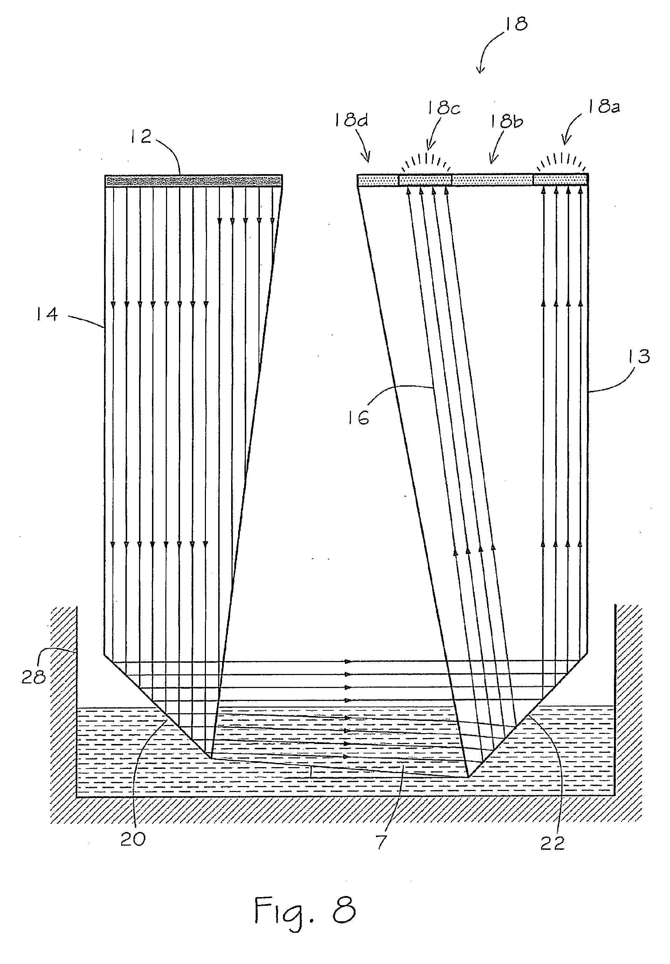

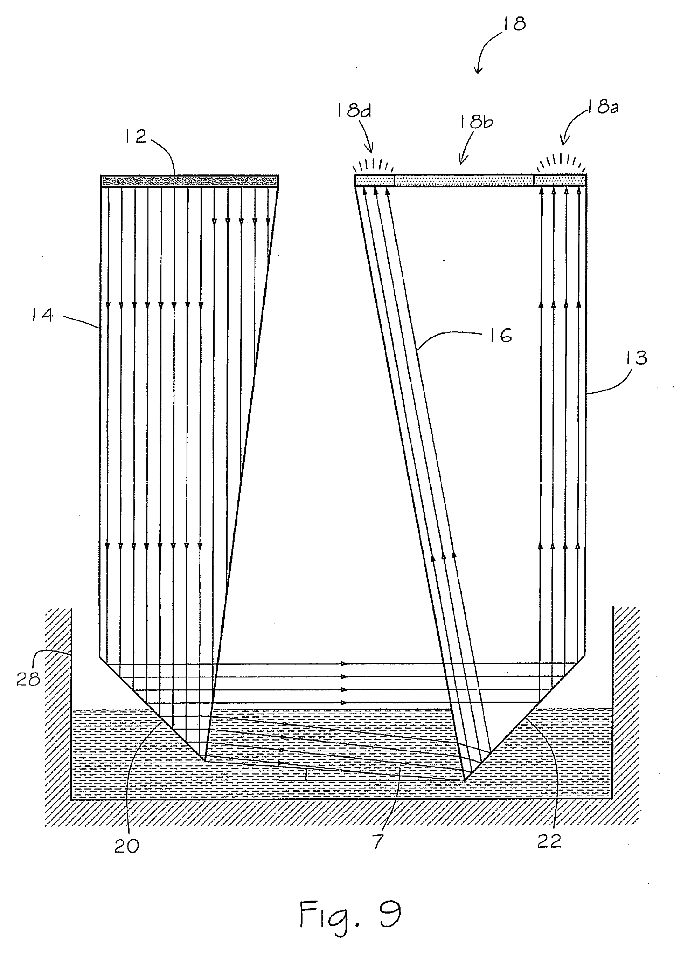

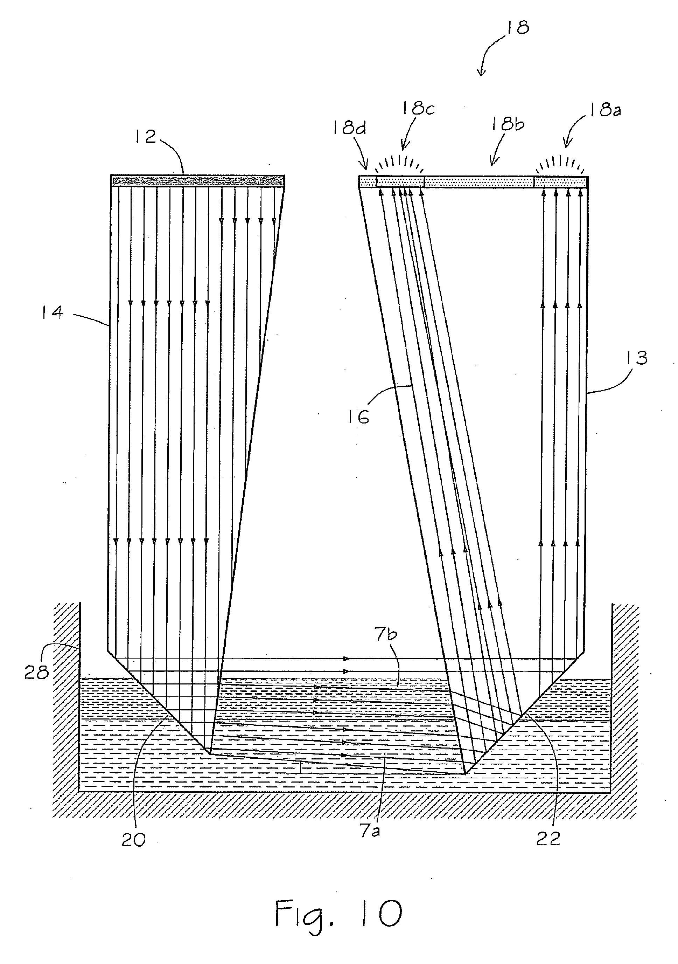

Fig. 8, 9, and 10 illustrates a cross-sectional view of a fluid level dip-stick indicator device, for determining presence of diesel fuel and/or water in a tank (which may suitable for pilots verifying the purity of fuel in the aircraft fuel tank), all figures represent the same device that, for clarity, is filled with; water and air (Fig 8), fuel and air (Fig 9) and water, fuel and air (Fig 10).

In Fig. 8 the indicator determines presence of water and air (no fuel). Since light refracts differently through water (lower layer) than through air (upper layer), the portion of the light beam that passes through air is reflected off mirror 22 towards portion 18a of the sensor, whereas the portion of light that passes through water is refracted by the water and the transparent material of the right hand-side column (as surfaces B and C - see Fig. 6 - are inclined), and then reflected off mirror 22 towards portion 18 c of the sensor. The rest of the sensor (portions 18b and 18d) remains uncovered by light. As the dimensions of the dip-stick are a-priori known and predesigned it is possible to determine the type of liquid (or fluid) the dip stick is immersed in just by the position of the light-covered portions of the sensor. Note that refraction resulting from the light passing from glass (or other transparent material from which the dip-stick columns are made) to air and vice versa also occurs, yet differently than in the case of water, and was not shown accurately in the figure for brevity.

Fig. 9 illustrates a cross-sectional view of the fluid level dip-stick indicator device, for determining presence of diesel fuel and/or water in a tank shown in Fig. 9, the indicator determining presence of diesel fuel and air. Similarly to the situation in Fig. 8 fuel has a different index of refraction than air, but it is also different than water, so the coverage of light across the detector is different than in the case shown in Fig. 8. Here the covered portion 18a attributed to light travelling through air remains unchanged. However the other lit portion 18d is further away from portion 18a due to the greater refraction caused by the fuel, leaving a greater strip of uncovered portion 18b of the detector 18.

Fig. 10 illustrates a cross-sectional view of the fluid level dip-stick indicator device, for determining presence of diesel fuel and/or water in a tank shown in Fig. 9, the indicator determining presence of water diesel fuel and air. Two sectors of the detector are now covered by the beam - 18a and 18c, the size and position of light coverage on the detector being determined by the nature of liquids and the corresponding level heights.

Hence the same tool can be used to determine presence of desired (fuel) or undesired (water) fluidic substances in the vessel.

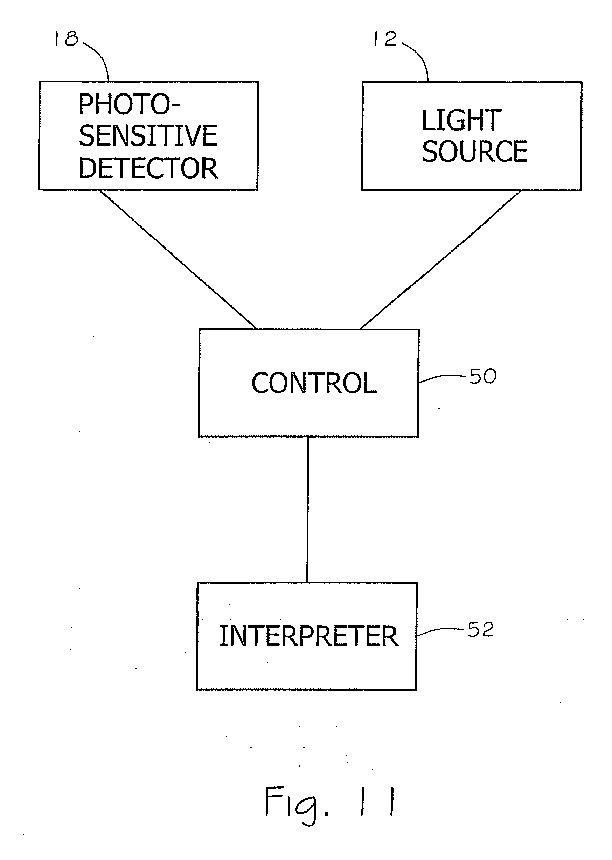

Fig. 11 illustrates a schematic block diagram of a fluid level indicator device in accordance with a preferred embodiment of the present invention. Control unit 50 communicates with light source 12 and photosensitive detector 18. The signal obtained from the detector is interpreted by interpreter 52. The interpreter can comprise a processor or a logical circuit that generates output data to a display or to another electronic system.

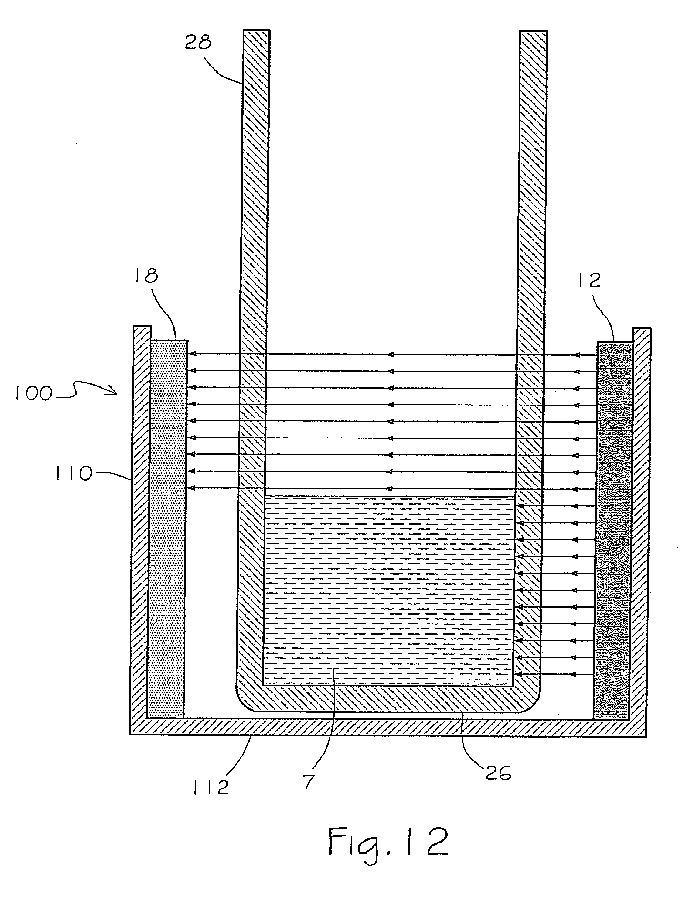

Fig. 12 illustrates a cross-sectional view of a fluid level indicator device in accordance with another preferred embodiment of the present invention. Here the light source is placed adjacent the side of the vessel (the vessel wall ought to be transparent, or at least a portion of the wall ought to be transparent - the portion opposite the light source and the opposing portion of the wall). The device 100 comprises bottom wall 112 and at least two opposing side walls 110 on which the light source 12 and the photosensitive sensor 18 are oppositely mounted. A vessel 28 with fluid 7 inside is placed in between the light source 12 and the photosensitive sensor 18, so that the light beam generated from light source 12 is directed into the vessel so that the top surface of the fluid is within the beam. As the fluid is opaque in the case shown in the figure only a portion of the beam that passes above the top surface of the fluid reaches the photosensitive sensor, hence the height level of the fluid can be determined.

It is noted that in the case corrosive fluids are anticipated to be present in the vessel to be examined anti-corrosive material will be used in the making of the tube, that is unaffected by the anticipated corrosive fluids.

It is noted that temperature may influence the diffraction angles both in the fluids measured and the material that will be used in the making of the tube; therefore, tube material to be selected in a way that will minimize the anticipated temperature bias.

It is noted that the vessel in this description may be part of fluid management system such as a vehicle fuel subsystem. The water/fuel detecting device as described may be located in various points of a vehicle fuel subsystem; at the entrance of the fuel tank - to prevent diluted fuel from the system; inside the fuel tank - to indicate fluids heights both water and fuel; on the way to the engine, inside the filtering subsystem; to support filtering out water.

It should be clear that the description of the embodiments and attached Figures set forth in this specification serves only for a better understanding of the invention, without limiting its scope.

It should also be clear that a person skilled in the art, after reading the present specification could make adjustments or amendments to the attached Figures and above described embodiments that would still be covered by the present invention.

## Claims

1. A fluid level detector device, for determining the height level of one or more immiscible fluids in a vessel, the device comprising:
at least one optical set-up comprising;
a light source (12) for generating a beam of light of predetermined width and optical characteristics, the light beam arranged to be directed into the fluid so as to cause refraction of the light beam, dependent on the index of refraction of the fluid, the light beam covering a predetermined detection region;
a photosensitive detector (18) capable of generating a signal corresponding to at least one optical characteristic of the light beam after passing the fluid; and
an interpreter (52) for receiving the signal, interpreting the signal and indicating the height level of the fluid.

2. The device according to claim 1, wherein the photosensitive detector (18) is operable to generate a signal proportional to the light coverage on the detector or proportional to the light position on the detector or proportional to the intensity of incident light on the detector.

3. The device according to claim 1 or 2, provided with opposite inclined reflective surfaces (20, 22) in the detection region, so as to facilitate passage of the light beam from the light source to the photosensitive detector.

4. The device according to any of the preceding claims, further provided with a dip stick (10), the dip-stick comprising an elongated body made from material transparent to the light beam, the light source and the photosensitive detector coupled to the dip stick, facilitating passage of the light beam through the transparent material of the dip stick.

5. The device according to claim 4, wherein the dip stick comprises two substantially opposite columns (14, 16), each column providing at least one interface surface (B, C) with the fluid, the light source directing the light beam through one of the two column and the photosensitive detector positioned so that it picks up light passing through the other of the two columns, after passing through one interface surface into the fluid and through the other interface surface out of the fluid, in the detection region.

6. The device according to claim 5, wherein one or more of the interface surfaces have a shape selected from a group of shapes containing: a plane, a concave surface, a convex surface.

7. The device according to claim 5, wherein one or more of the interface surfaces comprises one or more optical element selected from a group of optical elements which includes diffractive lenses, diffractive prisms beam splitters, colour filters, polarization filters, gratings and pinholes.

8. The device according to claim 5, wherein the dip stick is provided with opposite inclined reflective surfaces (20, 22), one reflective surface provided at an end of one column and the other refractive surface provided at a corresponding end of the other column.

9. The device according to claim 8, wherein the interface surfaces and the inclined surfaces each defme different angles with respect to a reference plane.

10. The device according to claim 8, wherein the two columns comprises opposite portions (14, 16) of a hollow tube (10).

11. The device according to claim 8, wherein said at least one optical set-up comprises a plurality of optical set-ups, and wherein the optical setups are arranged in an arrangement selected from a group of arrangements that include peripheral arrangements, stacked arrangements and staggered arrangements.

12. The device according to any of the preceding claims, wherein the light source and the photosensitive sensor are placed on opposing sides of a support platform (110) in between which the vessel may be inserted.

13. The device according to claim 12, wherein the support platform is provided with a bottom surface (112) on which the vessel may be placed.

14. A method of determining the height level of one or more immiscible fluids in a vessel, the method comprising:
providing a light source for generating a light beam of predetermined width and optical characteristics and a photosensitive detector;
directing the light beam into the fluid so as to cause refraction of the light beam, dependent on the index of refraction of the fluid, the light beam covering a predetermined detection region;
obtaining from the photosensitive detector a signal corresponding to at least one optical characteristic of the light beam after passing the fluid; and
interpreting the signal to determine the height level of said one or more fluids.

15. The method according to claim 14, comprising determining presence or type of said one or more fluids in the vessel by determining existence or location of the coverage of the beam on the photosensitive sensor.
